# EUROPÄISCHE PATENTANMELDUNG

(11) **EP 1 215 859 A1**
(43) Veröffentlichungstag der Anmeldung: **19.06.2002**
(21) Anmeldenummer: 00127455.4
(22) Anmeldetag: 14.12.2000
(51) Int. Cl.: H04L 12/64

(54) **Verfahren und Vorrichtung zum Übertragen von Daten verschiedener Anwendungen über ein Paketübertragungsnetz**

(71) Anmelder: SIEMENS AKTIENGESELLSCHAFT, 80333 München (DE)
(72) Erfinder: Hoffmann, Klaus, 81735 München (DE)

(57) **Zusammenfassung**

Erläutert wird unter anderem ein Verfahren, bei dem in einem Paketübertragungsnetz (10) Datenpakete abhängig von in den Datenpaketen enthaltenen Lenkdaten weitergeleitet werden. Abhängig von der Art der Anwendung werden bei Nutzung eines Ü-bertragungsprotokolls verschiedene Werte für eine Vergleichsgröße genutzt, die eine Wartezeit festlegt, in der auf Datenpakete gewartet wird, die gemäß einer vorgegebenen Reihenfolge in einer Netzübergangseinheit (42) eintreffen müssten.

## Beschreibung

Die Erfindung betrifft ein Verfahren, bei dem in einem Paketübertragungsnetz Datenpakete Lenkdaten und Nutzdaten enthalten. Die Datenpakete werden abhängig von den Lenkdaten in dem Paketübertragungsnetz weitergeleitet und gemäß einem vorgegebenen Übertragungsprotokoll übertragen. Beim Empfang der Datenpakete wird die Reihenfolge, in welcher die Datenpakete gesendet worden sind, wieder hergestellt.

Das Paketübertragungsnetz ist beispielsweise das Internet oder ein gemäß Internetprotokoll arbeitendes Datenübertragungsnetz. Jedoch werden auch andere Paketübertragungsnetze eingesetzt, z.B. ATM-Netze (Asynchronous Transfer Mode). In einem ATM-Netz werden die Datenpakete auch als Zellen bezeichnet. Die Datenpakete bzw. Zellen enthalten Lenkdaten, die für das Weiterleiten der in den Datenpaketen enthaltenen Nutzdaten eingesetzt werden, z.B. Adressdaten oder Pfad- bzw. Kanalangaben.

Die Datenpakete werden auf verschiedenen Übertragungswegen und/oder mit verschiedenen Verzögerungszeiten über das Paketübertragungsnetz übertragen. Im Empfänger muss die Reihenfolge der Datenpakete für viele Anwendungen wiederhergestellt werden. Für diese Zwecke enthalten die Datenpakete beispielsweise eine Sequenznummer oder eine Zeitmarke. In diesem Zusammenhang wird beispielsweise auf das Übertragungsprotokoll RTP (Real Time Protocol) verwiesen, die in den Defacto-Standards RFC 1889 (Request for Comment) und RFC 1890 von der IETF (Internet Engineering Task Force) festgelegt worden sind. So enthält der Kopfteil eines RTP-Datenpaketes unter anderem eine Sequenznummer und eine Zeitmarke, vergleiche RFC 1889, Abschnitt 5.1.

Um trotz der Verzögerungen und der Verluste von Datenpaketen eine Übertragung mit annehmbaren Übertragungszeiten vorzunehmen, wird ein sogenannter Jitterbuffer eingesetzt, in welchem Datenpakete eine bestimmte Zeit gespeichert werden, bis nicht mehr auf ein ausstehendes Datenpaket gewartet wird. Ist der Jitterbuffer voll, so wird die Übertragung auch beim Fehlen einzelner Datenpakete fortgesetzt oder es wird eine Wiederholung der Übertragung angefordert. Die Größe des Jitterbuffers beeinflusst also die Wartezeit, um die die Übertragung beim Fehlen von Datenpaketen verzögert wird.

Aus dem Standard H.323 "Packet based multimedia communications systems" der ITU-T (International Telecommunication Union - Telecommunication Standardization Sector), Abschnitt 6.2.5 ist die Steuerung der Größe des Jitterbuffers und damit der Wartezeit abhängig von den Fähigkeiten eines Encoders bekannt.

Es ist Aufgabe der Erfindung, zum Übertragen von Daten verschiedener Anwendungen über ein Paketübertragungsnetz ein einfaches Verfahren anzugeben, das insbesondere sichert, dass Verzögerungen bei der Übertragung der Datenpakete oder Verluste von Datenpaketen für verschiedene Anwendungen in einem akzeptablen Rahmen bleiben, ohne bestimmte Anwendungen übermäßig zu benachteiligen. Außerdem sollen zugehörige Einheiten und ein zugehöriges Programm angegeben werden.

Die auf das Verfahren bezogene Aufgabe wird durch die in dem Patentanspruch 1 angegebenen Verfahrensschritte gelöst. Weiterbildungen sind in den Unteransprüchen angegeben.

Beim erfindungsgemäßen Verfahren wird zusätzlich zu den eingangs genannten Verfahrensschritten abhängig von einer Vergleichsgröße die Bearbeitung der Datenpakete in der wiederhergestellten Reihenfolge fortgesetzt, auch wenn ein vorhergehendes Datenpaket noch nicht empfangen worden ist. Alternativ wird abhängig von der Vergleichsgröße eine Wiederholung der Übertragung mindestens eines Datenpaketes angefordert. Außerdem werden abhängig von der Anwendung, für die die Nutzdaten übertragen werden, für verschiedene Anwendungen verschiedene Werte der Vergleichsgröße vorgegeben. Die Vorgabe des Wertes für die Vergleichsgröße erfolgt zweckmäßigerweise vor Beginn der Übertragung der Datenpakete.

Durch das erfindungsgemäße Verfahren wird erreicht, dass trotz der Verwendung eines gemeinsamen Übertragungsprotokolls die Vergleichsgröße an verschiedene Anwendungen angepasst werden kann. Durch die Vorgabe der Vergleichsgröße abhängig von der Anwendungsart lässt sich die Vergleichsgröße für jede Anwendung optimal wählen, ohne auf andere Anwendungen Rücksicht nehmen zu müssen. Für die Übertragung von Sprachdaten in Echtzeit wird beispielsweise eine Vergleichsgröße gewählt, die nur zu Verzögerungen von maximal 30 Millisekunden auf Grund des Wartens auf ein Datenpaket führt. 30 Millisekunden sind bei der Übertragung von Sprachdaten gerade noch hinnehmbar, ohne dass die Sprachqualität unter einen akzeptablen Wert sinkt. Bei der Übertragung von Daten, bei deren Übertragung es nicht auf die Echtzeitbedingungen ankommt, wird dagegen ein erheblich größerer Wert für die Vergleichsgröße gewählt, beispielsweise 250 Millisekunden. Diese Daten werden im Folgenden als Rechnerdaten bezeichnet. Durch die längere Wartezeit bzw. durch einen größeren Zwischenspeicher wird erreicht, dass bei der Übertragung von Rechnerdaten eine geringe Fehlerrate auftritt als bei der Übertragung von Sprachdaten. Die längere Wartezeit ermöglicht es auch Datenpakete zu bearbeiten, die eine längere Übertragungszeit haben.

Bei einer Weiterbildung des erfindungsgemäßen Verfahrens enthalten die Datenpakete jeweils eine Sequenznummer zum Festlegen der Reihenfolge und/oder eine Zeitangabe, die angibt, welchen Bezug die in den betreffenden Datenpakete enthaltenen Nutzdaten zu einer Bezugszeit oder zu einem Bezugstakt haben. Die genannten Maßnahmen sind vergleichsweise einfach, um die Reihenfolge der Datenpakete wiederherstellen zu können. Das Verwenden von Zeitangaben bietet sich insbesondere dann an, wenn am Empfänger eine Synchronisation auf einen Takt erforderlich ist.

Bei einer anderen Weiterbildung ist das Übertragungsprotokoll ein Protokoll, das zur Echtzeitübertragung von Nutzdaten geeignet ist. Echtzeitübertragung bedeutet, dass die Daten auf der Sendeseite erzeugt werden und anschließend innerhalb einer fest vorgegebenen Zeitdauer beim Empfänger angekommen sein müssen. Bei Sprachdaten beträgt die Zeitdauer beispielsweise 30 Millisekunden. Ein für die Echtzeitübertragung geeignetes Protokoll ist das Protokoll RTP, das in den bereits genannten Defacto-Standards RFC 1889 und RFC 1890 festgelegt ist. Das Protokoll RTP eignet sich für die Übertragung von Datenpaketen über das Internet besonders gut.

Bei einer nächsten Weiterbildung ist die eine Anwendungsart die Übertragung von Sprachdaten in Echtzeit. Die andere Anwendungsart ist die Übertragung von Rechnerdaten, die bereits vor Beginn der Übertragung vollständig in einer Sendeeinheit gespeichert sind. Solche Rechnerdaten sind beispielsweise Programmdaten zum Festlegen von Befehlen für einen Prozessor, Textdaten, die Worte eines Textes festlegen oder Bilddaten, die Bildpunkte eines Bildes festlegen. Aber auch Sprachdaten, z.B. ein Diktat, können Rechnerdaten sein. Das Übertragungsprotokoll muss demzufolge für die Übertragung von Sprachdaten in Echtzeit geeignet sein. Jedoch wird das für die Echtzeitübertragung geeignete Übertragungsprotokoll auch für die Übertragung von Daten genutzt, für die eigentlich keine Echtzeitübertragung erforderlich wäre. Wie bereits erwähnt, lässt sich durch die Verwendung nur eines Übertragungsprotokolls der Implementierungsaufwand senken. Auch muss nicht bei jedem Wechsel der Anwendungsart das Übertragungsprotokoll geändert werden. Durch das längere Warten bei Rechnerdaten werden weniger Anforderungen zur erneuten Übertragung gestellt. Die Bitfehlerrate bei der Übertragung der Rechnerdaten sinkt.

Bei einer Weiterbildung des erfindungsgemäßen Verfahrens wird zwischen zwei Endgeräten eines durchschaltvermittelten Telekommunikationsnetzes ein Übertragungsweg zum Übertragen der Nutzdaten festgelegt. Zwischen zwei Netzübergangseinheiten liegt ein Abschnitt des Übertragungsweges in dem Paketübertragungsnetz. Die Netzübergangseinheiten werden durch mindestens eine Steuereinheit gesteuert. Die Steuereinheit der Datenpakete empfangenden Netzübergangseinheit bzw. die Steuereinheiten der Datenpakete empfangenden Netzübergangseinheiten bei einer bidirektionalen Übertragung gibt bzw. geben den Wert der Vergleichsgröße vor.

Das durchschaltevermittelte Telekommunikationsnetz ist beispielsweise ein Netz, in dem die Nutzdaten in Zeitkanälen weitergeleitet werden, z.B. in Zeitkanälen eines PCM-Systems (Pulse Code Modulation). Ein solches Netz ist beispielsweise das Telefonnetz der deutschen Telekom AG. Die Steuereinheit gibt den Wert für die Vergleichsgröße z.B. in einer separaten Steuernachricht vor. Jedoch lassen sich auch für andere Zwecke eingesetzte Nachrichten um ein Feld für die Übergabe des Wertes der Vergleichsgröße erweitern. Durch die Weiterbildung wird es möglich, auch bei der gemeinsamen Nutzung von durchschaltevermittelten Telekommunikationsnetzen und Paketübertragungsnetzen Daten verschiedener Anwendungen auf einfache Art zu übertragen. Die Vorteile der verschiedenen Netze lassen sich so besser nutzen.

Bei einer nächsten Weiterbildung ist die Steuereinheit räumlich entfernt von einer Netzübergangseinheit angeordnet, z.B. in einer Entfernung von mehreren 100 km. Zwischen Steuereinheit und Netzübergangseinheit wird ein standardisiertes Protokoll oder ein defacto-standardisiertes Protokoll zum Übertragen von Steuerungsnachrichten eingesetzt. So wird das Protokoll gemäß Standard H.248 der ITU-T, das Protokoll MGCP (Media Gateway Control Protocol), siehe RFC 2705, eingesetzt. Auch der Wert der Vergleichsgröße wird unter Beachtung dieser Protokolle oder eines auf einem dieser Protokolle aufbauenden Protokolls übertragen.

Bei einer Weiterbildung sendet die Steuereinheit an die die Datenpakete mit den Nutzdaten empfangende Netzübergangseinheit eine Verbindungsaufbaunachricht, in welcher der Wert für die Vergleichsgröße angegeben ist. Durch diese Maßnahme lässt sich der Wert für die Vergleichsgröße mit einer ohnehin zu übertragenden Verbindungsaufbaunachricht übertragen. Zusätzliche Nachrichten zum Übermitteln der Vergleichgröße sind nicht erforderlich. Beim Verwenden des Protokolls MGCP wird bei einer Ausgestaltung die Vergleichsgröße durch ein mit "X-" beginnendes Kennzeichen bezeichnet, das auf einen sogenannten experimentellen Parameter hinweist, siehe Defacto-Standard RFC 2705, Abschnitt 3.2.2 "Parameter lines", Parameter "X-". So wird ein Kennzeichen "X-MaJiBu" eingesetzt, um nach Art eines sprechenden Namens auf die Vergleichsgröße hinzuweisen. Das Kennzeichen ist ein Akronym für die Größe eines maximalen Jitter-Buffers.

Bei einer nächsten Weiterbildung wird beim Festlegen des Übertragungsweges mindestens eine Vermittlungsstelle des durchschaltevermittelten Netzes einbezogen. Die Anwendungsart der Daten wird anhand des Wertes eines in einem Signalisierungsprotokoll für die Vermittlungsstelle festgelegten Parameters ermittelt. So lässt sich der im ISUP-Standard (ISDN User Part) bzw. im BICC-Standard festgelegte Parameter TMR (Transmission Medium Requirement) zur Beschreibung der Anforderung an das Übertragungsmedium nutzen. Die Vermittlungsstelle veranlasst dann die Vorgabe des Wertes für die Vergleichsgröße abhängig vom Wert des Parameters. Die Anwendungsart lässt sich so vergleichsweise einfach ermitteln. Die Vermittlungsstellen sind gegebenenfalls beim Aufbau eines Übertragungsweges ohnehin beteiligt, so dass der Aufwand zum Ermitteln der Anwendungsart marginal ist.

Der Kern des von der ITU-T (International Telecommunication Union - Telecommunication Standardization Sector) festgelegten ISUP-Standards enthält die folgenden Standards:
- Q.761(21/99) "Signalling System No. 7 - ISDN user part functional description",
- Q.762 (2000) "Signalling System No. 7 - ISDN user part general function of messages and signals",
- Q.763 (1997) "Signalling System No. 7 - ISDN user part formats and codes", und
- Q.764 (09/97) "Signalling System No. 7 - ISDN user part signalling procedures".

So ist der erwähnte Parameter TMR im Standard Q.764, Abschnitt 2.1.1.1a angegeben. Die Werte des Parameters TMR sind im Standard Q.763, Abschnitt 3.54, festgelegt. Der Wert Null zeigt beispielsweise Sprachdaten an. Der Wert Zwei zeigt "64 kBit/s unbeschränkt" an und weist beispielsweise auf die Übertragung von Rechnerdaten hin.

Der BICC-Standard ist im von der ITU-T festgelegten Standard Q.1901 "Bearer Independent Call Control Protocol" enthalten. Der BICC-Standard basiert zwar auf dem ISUP-Standard, unterscheidet sich jedoch von diesem Standard. Beispielsweise muss der zentrale CIC (Circuit Identification Code) von zwei Byte auf vier Byte verlängert werden. Momentan ist der BICC-Standard auf die Übertragung der Nutzdaten in einem ATM-Netz bezogen. Eine Erweiterung auf IP-Netze (Internet Protocol) ist absehbar.

Die Vermittlungsstellen lassen sich außerdem zum Verbindungsaufbau und zum Verbindungsabbau einbeziehen. Auch können über die Vermittlungsstellen Signalisierungsnachrichten zwischen den Netzübergangseinheiten ausgetauscht werden. Zum Austausch dieser Nachrichten wird ein für die genannten Standards festgelegtes Transportverfahren mit festgelegten Transportelementen eingesetzt. Ein solches Transportelement ist beispielsweise im Standard Q.763 Add.1 (06/00) festgelegt und wird dort als Container APP (Application Transport Parameter) bezeichnet. Das Transportprotokoll für diesen Container ist im Standard Q.765 "Revised Recommendation Q.765 (Application Transport Mechanism)" vorgegeben. Der Standard Q.765.5 "Application Transport Mechanism - Bearer Independent Call Control" baut auf dem Standard Q.765 auf und wurde insbesondere für den BICC-Standard entwickelt. Jedoch lassen sich die im Standard Q.765.5 angegebenen Transportelemente auch beim Verwenden des ISUP-Standards verwenden, insbesondere bei Einhaltung der oben angegebenen zum Kern gehörenden Standards.

Bei einer anderen Weiterbildung ist das Paketübertragungsnetz das Internet oder ein anderes gemäß Internetprotokoll arbeitendes Datenübertragungsnetz. Die Signalisierung zwischen Vermittlungsstellen des durchschaltevermittelten Netzes wird gemäß BICC-Standard oder gemäß einem leicht modifizierten ISUP-Standard ausgeführt.

Die Erfindung betrifft außerdem eine Netzübergangseinheit, eine Steuereinheit für eine Netzübergangseinheit und eine Vermittlungsstelle. Die genannten Einheiten dienen zur Durchführung des erfindungsgemäßen Verfahrens und seiner Weiterbildungen. Somit gelten die oben genannten technischen Wirkungen auch für diese Einheiten.

Außerdem betrifft die Erfindung ein Programm mit einer Befehlsfolge, bei deren Ausführung durch einen Prozessor das erfindungsgemäße Verfahren oder eine seiner Weiterbildungen ausgeführt bzw. die Funktion einer der zugehörigen Einheiten erbracht wird. Die oben genannten technischen Wirkungen gelten auch für das Programm.

Im folgenden werden Ausführungsbeispiele der Erfindung an Hand der beiliegenden Zeichnungen erläutert. Darin zeigen:
- Figur 1: ein mit dem Internet verbundenes Telefonnetz und in den verbundenen Netzen zum Festlegen von Übertragungswegen ausgetauschte Signalisierungsnachrichten,
- Figur 2: den Aufbau eines Informationselementes zur Übertragung einer Internetadresse,
- Figur 3: den Aufbau eines Informationselementes zur Übertragung einer RTP-Portnummer,
- Figur 4: den Aufbau eines Codeelementes zur Bezeichnung der Rufinstanz, und
- Figur 5: aufeinanderfolgende Datenpakete und Wartezeiten.

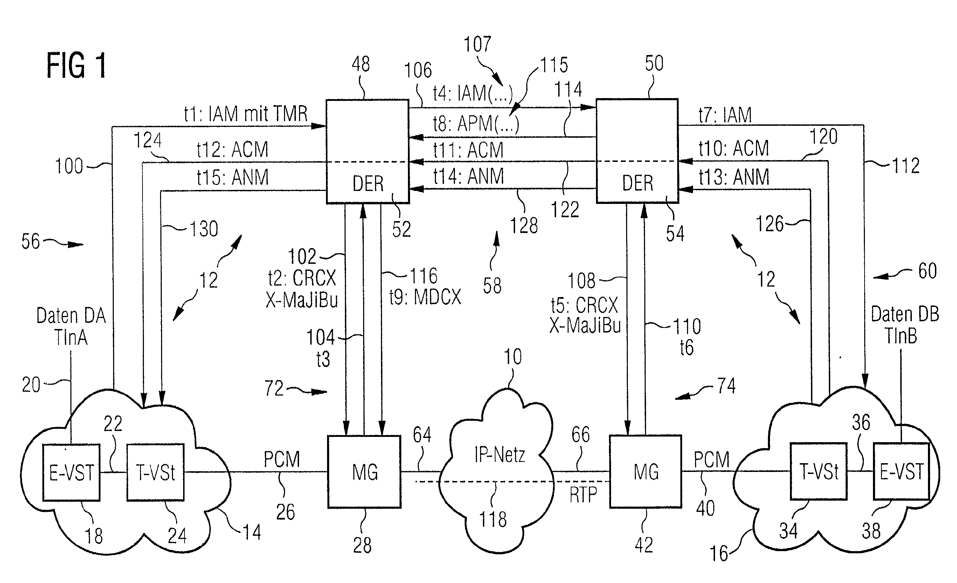

Figur 1 zeigt ein mit dem Internet 10 verbundenes Telefonnetz 12, z.B. das Telefonnetz der deutschen Telecom AG. In Figur 1 sind zwei Teile 14 und 16 des Telefonnetzes 12 dargestellt. Der Teil 14 befindet sich beispielsweise in Süddeutschland und der Teil 16 in Norddeutschland. Im Teil 14 ist eine Endvermittlungsstelle 18 dargestellt, an die über eine Übertragungsleitung 20 ein Datenübertragungs-Rechner DA eines Teilnehmers TlnA angeschlossen ist, z.B. über einen ISDN-Anschluss (Integrated Services Digital Network). Die Endvermittlungsstelle 18 ist über eine Zwischenamtsleitung 22 mit einer Transitvermittlungsstelle 24 verbunden. Die Transitvermittlungsstelle 24 ist beispielsweise eine herkömmliche Vermittlungsstelle vom Typ EWSD (elektronisch gesteuertes digitales Wählsystem) der Firma Siemens AG. Eine Übertragungsstrecke 26 führt von der Transitvermittlungsstelle 24 zu einer Netzzugangseinheit 28. Die Übertragungsstrecke 26 ist beispielsweise ein Kanal eines PCM-30-Systems (Puls Code Modulation), wie es sonst zur Übertragung von Sprachdaten zwischen verschiedenen Vermittlungsstellen eingesetzt wird. Das PCM Verfahren verwendet den ITU-T CODEC G.711. Die Verbindungen zwischen verschiedenen Vermittlungsstellen werden auch als Trunks bezeichnet. Die Funktion der Netzzugangseinheit 28 wird weiter unten erläutert.

Der Teil 16 des Telefonnetzes 12 enthält eine Transitvermittlungsstelle 34, z.B. vom Typ EWSD. Die Transitvermittlungsstelle 34 ist über eine Zwischenamtsleitung 36 mit einer Endvermittlungsstelle 38 verbunden, an die ein Datenübertragungs-Rechner DB eines Teilnehmers TlnB angeschlossen ist. Eine Übertragungsstrecke 40 führt von der Transitvermittlungsstelle 34 zu einer Netzzugangseinheit 42. Die Übertragungsstrecke 40 ist beispielsweise ein PCM-Kanal, wie er üblicherweise zur Übermittlung von Sprachdaten zwischen Vermittlungsstellen eingesetzt werden. Die Funktion der Netzzugangseinheit 42 wird weiter unten erläutert.

Das Telefonnetz 12 enthält außerdem zwei Vermittlungsstellen 48 und 50, die Weiterentwicklungen der Vermittlungsstellen vom Typ EWSD sind. Zusätzlich zu den Funktionen einer Vermittlungsstelle vom Typ EWSD übernehmen die Vermittlungsstellen 48 und 50 auch die Funktionen von Diensterbringungsrechnern 52 und 54. Diese zusätzlichen Funktionen werden ebenfalls weiter unten an Hand der Figur 1 erläutert. Zwischen der Vermittlungsstelle 58 und der Transitvermittlungsstelle 24 lässt sich eine Signalisierungsverbindung 56 aufbauen, auf der Signalisierungsnachrichten gemäß Protokoll ISUP (ISDN-User Part) übertragen werden. Beispiele für Nachrichten dieses Protokolls werden unten an Hand der Figur 1 erläutert.

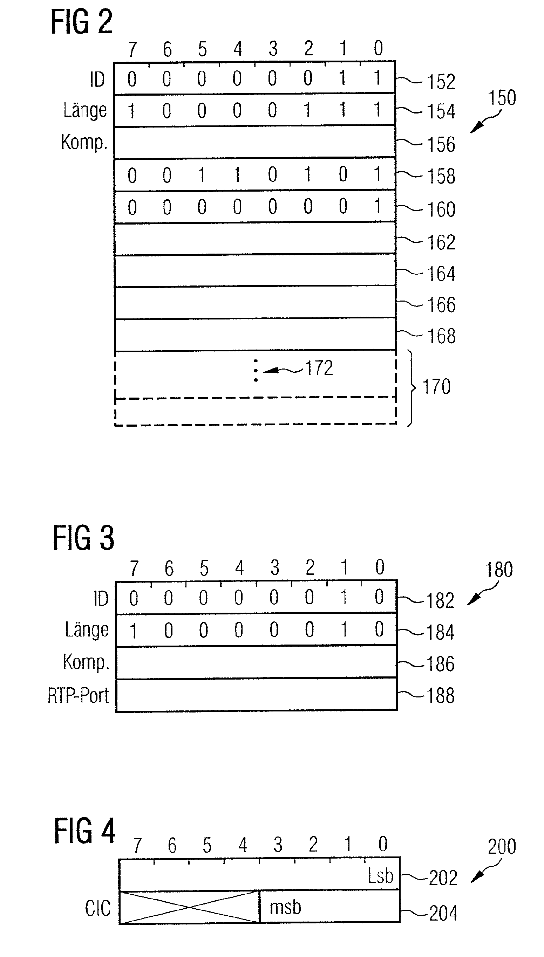

Zwischen den Vermittlungsstellen 48 und 50 lässt sich eine Signalisierungsverbindung 58 aufbauen. Die Signalisierungsnachrichten über diese Signalisierungsverbindung werden ebenfalls gemäß ISUP-Protokoll übertragen. Informationselemente werden als Bestandteil der Signalisierungsnachrichten in einem Container APP (Application Association Parameter) gemäß Standard Q.765 Add. 1 (06/00) übertragen. Diese Informationselemente werden unten an Hand der Figuren 2 und 3 erläutert.

Zwischen der Vermittlungsstelle 50 und der Transitvermittlungsstelle 34 lässt sich eine Signalisierungsverbindung 60 aufbauen, auf der Signalisierungsnachrichten gemäß Protokoll ISUP übertragen werden.

Für die Übertragung der Sprachdaten zwischen dem Teilnehmer TlnA und dem Teilnehmer TlnB bzw. der Rechnerdaten zwischen den Rechnern DA und DB wird sowohl das Telefonnetz 12 als auch das Internet 10 eingesetzt. Innerhalb des Telefonnetzes 12 werden die Sprachdaten bzw. die Rechnerdaten in Sprachkanälen durchschaltevermittelt übertragen. Innerhalb des Internets 10 werden die Sprachdaten bzw. Rechnerdaten dagegen in Datenpaketen übertragen.

In den Netzzugangseinheiten 28 und 42 werden jeweils in Sprachkanälen empfangene Sprachdaten bzw. Rechnerdaten auf Datenpakete aufgeteilt und ins Internet 10 weitergeleitet. Aus dem Internet 10 kommende Datenpakete mit Sprachdaten bzw. Rechnerdaten werden in den Netzzugangseinheiten 28 und 42 entpackt und in Sprachkanälen in das Telefonnetz 12 weitergeleitet. Die Netzzugangseinheit 28 bzw. 42 ist über Übertragungsstrecke 64 bzw. 66 an das Internet 10 angeschlossen. Somit können Datenpakete über das Internet 10 zwischen den Netzzugangseinheiten 28 und 42 ausgetauscht werden. Auch die Diensterbringungsrechner 52 und 54 sind mit dem Internet 10 verbunden. Somit lassen sich auch Datenpakete zwischen den Diensterbringungsrechnern 52 bzw. 54 und den Netzzugangseinheiten 28 und 42 austauschen, siehe Signalisierungsweg 72 zwischen dem Diensterbringungsrechner 52 und der Netzzugangseinheit 28 bzw. Signalisierungsweg 74 zwischen dem Diensterbringungsrechner 54 und der Netzzugangseinheit 42. Die Netzzugangseinheiten 28 und 42 sowie die Diensterbringungsrechner 52 und 54 haben jeweils mindestens eine Internet-Adresse, unter der sie im Internet 10 erreichbar sind.

Im Folgenden werden Signalisierungsnachrichten zum Aufbau einer Verbindung zum Übertragen von Rechnerdaten bzw. von Sprachdaten zwischen dem Teilnehmer TlnA und dem Teilnehmer TlnB erläutert. Beim Aufbau einer Gesprächsverbindung zwischen dem Teilnehmer TlnA und dem Teilnehmer TlnB bzw. einer Datenübertragungsverbindung zwischen den Rechnern DA und DB erzeugt die Transitvermittlungsstelle 24 zu einem Zeitpunkt t1 ISUP-protokollgemäß eine Verbindungsaufbaunachricht 100, auch IAM-Nachricht (Initial Address Message) genannt. Diese Nachricht enthält unter anderem beispielsweise die vollständige Rufnummer des Teilnehmers TlnB im Telefonnetz 12 und die Nummer eines für die Übertragung zu nutzenden Zeitschlitzes auf der Übertragungsstrecke 26. In einem TMR genannten Parameter der Verbindungsaufbaunachricht 100 ist die Art der Verbindung und damit auch die Art der Anwendung angegeben. Für Sprachdaten wird ein Wert für "Sprachverbindung" angegeben. Für Datenübertragung zwischen Rechnern wird ein Wert für "64 kBit/s unbeschränkt" angegeben, siehe Standard Q.764, Abschnitt 2.1.1.1a.

Die Verbindungsaufbaunachricht 100 wird über die Signalisierungsverbindung 56 übertragen. Nach dem Empfang der Verbindungsaufbaunachricht 100 wird in der Vermittlungsstelle 48 ein Programm ausgeführt, bei dessen Ausführung festgestellt wird, dass zur Übertragung der Rechnerdaten bzw. der Sprachdaten das Internet 10 nutzbar ist. Es wird ermittelt, dass als Schnittstelle zwischen Telefonnetz 12 und Internet 10 auf der Seite des Teilnehmers TlnA die Netzzugangseinheit 28 genutzt werden muss. Der Diensterbringungsrechner 52 wird von einer Steuereinheit der Vermittlungsstelle 48 veranlasst, die dazu erforderlichen Schritte auszuführen. Der Wert des Parameters TMR wird protokollgemäß an den Diensterbringungsrechner 52 weitergeleitet.

Zu einem nach dem Zeitpunkt t1 liegenden Zeitpunkt t2 sendet der Diensterbringungsrechner 52 an die Netzzugangseinheit 28 über den Signalisierungsweg 72 eine Verbindungsaufbaunachricht 102 gemäß Defacto-Standard RFC 2705. Die Verbindungsaufbaunachricht 102 wird auch als CRCX-Nachricht (Create Connection) bezeichnet. In der Verbindungsaufbaunachricht 102 ist der Zeitschlitz angegeben, der für die Nutzdatenübertragung genutzt werden soll. Außerdem ist abhängig vom Wert in dem Parameter TMR als CODEC (Codierung/Decodierung) für die Übertragung von Sprachdaten das Verfahren gemäß Standard G.723.1 der ITU-T für die Übertragung von Sprachdaten angegeben, so dass eine Komprimierung der Sprachdaten in der Netzzugangseinheit 28 ausgeführt wird. Gegebenenfalls wird für die Übertragung von Sprachdaten eine Sprachpausenunterdrückung und eine Echounterdrückung eingeschaltet.

Für die Übertragung von Rechnerdaten wird dagegen der CODEC gemäß Standard G.711 der ITU-T genutzt, d.h. es wird keine Komprimierung eingesetzt. Für die Übertragung von Rechnerdaten wird eine Sprachpausenunterdrückung und eine Echounterdrückung ausgeschaltet.

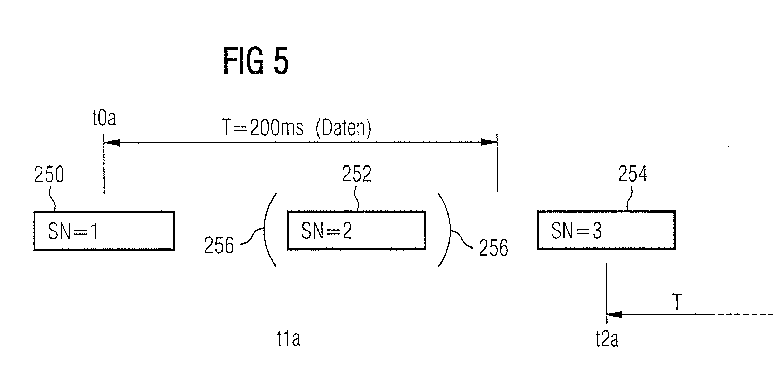

Weiterhin wird in einem Datenfeld "X-MaJiBu" der Verbindungsaufbaunachricht 102 ein Wert für eine Wartezeit T angegeben, die unten an Hand der Figur 5 erläutert wird. Es werden 30 ms Wartezeit für die Übertragung von Sprachdaten und 200 ms für die Übertragung von Rechnerdaten gewählt. Das Datenfeld "X-MaJiBu" wurde in einem sogenannten "experimental parameter" festgelegt, siehe RFC 2705, Abschnitt 3.2.2 "Parameter lines", Beispiel "X-FlowerOfTheDay: Daisy".

Bei Angabe des Parameters "X-MaJiBu" wird die automatische Einstellung der Größe eines sogenannten Jitterbuffers ausgeschaltet, welche die Wartezeit T beeinflussen würde. Die automatische Einstellung wird nur eingeschaltet, wenn in einer Verbindungsaufbaunachricht der Parameter "X-MaJiBu" nicht angegeben ist.

Die Netzzugangseinheit 28 bearbeitet die Verbindungsaufbaunachricht 102, führt die erforderlichen Einstellungen durch und erzeugt als Antwort zu einem Zeitpunkt t3 eine Antwortnachricht 104. Die Antwortnachricht 104 bestätigt zum einen den Empfang der Verbindungsaufbaunachricht 102 und enthält u.a. eine Internetadresse und eine Portnummer, die für den Empfang von Nutzdaten für eine zwischen der Netzzugangseinheit 28 und der Netzzugangseinheit 42 aufzubauende RTP-Verbindung (Real Time Protocol, siehe RFC 1889 und RFC 1890) nutzbar ist und die nun dem Zeitschlitz zugeordnet ist, der auf der Übertragungsstrecke 26 für die aufzubauende Verbindung genutzt wird. Die RTP-Verbindung ist zum Übertragen von Sprachdaten bzw. Rechnerdaten geeignet.

Der Diensterbringungsrechner 52 empfängt die Antwortnachricht 104 und leitet die empfangene Internet-Adresse sowie die Portnummer an die Steuereinheit der Vermittlungsstelle 48 weiter. Die Steuereinheit der Vermittlungsstelle 48 bearbeitet die Verbindungsaufbaunachricht 100 gemäß ISUP-Protokoll und erzeugt zu einem Zeitpunkt t4 eine Verbindungsaufbaunachricht 106. Die Verbindungsaufbaunachricht 106 wird gemäß ISUP-Protokoll auch als IAM-Nachricht (Initial Address Massage) bezeichnet. In der Verbindungsaufbaunachricht 106 sind zwei unten an Hand der Figuren 2 und 3 näher erläuterte Informationselemente enthalten, in denen die Internetadresse und die Portnummer weitergeleitet werden, siehe Punkte 107. Diese Informationselemente sind nicht im ISUP-Standard festgelegt, werden jedoch unter Einhaltung des ISUP-Standards über die Signalisierungsverbindung 58 übertragen. Auch die Verbindungsnachricht 106 enthält den Parameter TMR, mit dem gleichen Wert, wie in der Verbindungsaufbaunachricht 100.

Die Vermittlungsstelle 50 empfängt die Verbindungsaufbaunachricht 106 und bearbeitet auch die darin enthaltenen Informationselemente. Aufgrund des Inhalts dieser Informationselemente oder an Hand des Codes (CIC - Circuit Identifikation Code) zur Bezeichnung der Rufinstanz wird erkannt, dass keine übliche Telefonverbindung, sondern eine Telefonverbindung unter Verwendung des Internets 10 aufgebaut werden soll. Als zu nutzende Netzzugangseinheit auf der Seite des Teilnehmers TlnB wird durch die Vermittlungsstelle 50 die Netzzugangseinheit 42 ermittelt. Außerdem bestimmt die Vermittlungsstelle 50 einen Zeitschlitz, der bei ausschließlich durchschaltevermittelter Übertragung der Nutzdaten zwischen den Vermittlungsstellen 50 und 34 zu nutzen wäre. Dieser Zeitschlitz bezeichnet einen Übertragungskanal der Übertragungsstrecke 40. Die Vermittlungsstelle 50 wertet auch den Parameter TMR aus und meldet diesen Wert an den Diensterbringungsrechner 54 weiter.

Der Diensterbringungsrechner 54 wird durch die Steuereinheit der Vermittlungsstelle 50 veranlasst, eine Internetverbindung über den Signalisierungsweg 74 aufzubauen. Zu einem Zeitpunkt t5 sendet der Diensterbringungsrechner 54 eine Verbindungsaufbaunachricht 108 an die Netzzugangseinheit 42. Die Verbindungsaufbaunachricht 108 entspricht dem bereits erwähnten Defacto-Standard RFC 2705 und wird auch als CRCX-Nachricht (Create Connection) bezeichnet. In der Nachricht 108 sind die von der Netzzugangseinheit 28 über die Vermittlungsstelle 48 gesendete Internetadresse und die Portnummer enthalten, die für die aufzubauende RTP-Verbindung zu nutzen sind. Außerdem sind in der Verbindungsaufbaunachricht 108 der von der Vermittlungsstelle 50 ermittelte Zeitschlitz sowie abhängig vom Wert des Parameters TMR der CODEC angegeben, bei Sprachverbindungen der CODEC G.723.1 und bei Datenübertragungsverbindungen der CODEC G.711. Bei Sprachverbindungen wird automatisch eine Sprachpausenunterdrückung und eine Echounterdrückung in der Netzzugangseinheit 42 mit Hilfe der Verbindungsaufbaunachricht 108 eingeschaltet. Datenfelder zum Signalisieren dieser Einstellungen sind gemäß Defacto-Standard RFC 2705 für die Nachricht CRCX festgelegt. Bei Datenübertragungsverbindungen werden die Sprachpausenunterdrückung und die Echounterdrückung dagegen ausgeschaltet.

Die Verbindungsaufbaunachricht 108 enthält außerdem in einem Datenfeld "X-MaJiBu" einen Wert für eine Wartezeit T. Das Datenfeld "X-MaJiBu" ist, wie bereits erwähnt, eine proprietäre Erweiterung des Defacto-Standards RFC 2705. Für die Übertragung von Sprachdaten wird ein Wert für 30 ms Wartezeit angegeben. Für die Übertragung von Rechnerdaten wird ein Wert von 200 ms gewählt.

Bei der Bearbeitung der Verbindungsaufbaunachricht 108 in der Netzzugangseinheit 42 wird zu dem angegebenen Zeitschlitz eine Internetadresse und eine noch nicht belegte Portnummer der Netzzugangseinheit 42 ermittelt, die für den Empfang der Nutzdatenpakete von der Netzzugangseinheit 28 nutzbar sind. Die Echounterdrückung und die Sprachpausenunterdrückung werden ein- bzw. ausgeschaltet. Der Wert für die Wartezeit T wird vermerkt. Eine automatische Einstellung des sogenannten Jitterbuffers, welche die Wartezeit T beeinflussen würde, wird ausgeschaltet. Die Netzzugangseinheit 42 sendet anschließend zu einem Zeitpunkt t6 eine Antwortnachricht 110, um den Empfang der Verbindungsaufbaunachricht 108 zu bestätigen. Die Antwortnachricht 110 enthält außerdem die ermittelte Internetadresse der Netzzugangseinheit 42 sowie die ermittelte Portnummer.

Der übrige Teil der Verbindungsaufbaunachricht 106 wird in der Vermittlungsstelle 50 gemäß Protokoll ISUP bearbeitet. Dabei wird eine Verbindungsaufbaunachricht 112 erzeugt, die über die Signalisierungsverbindung 60 an die Transitvermittlungsstelle 34 übertragen wird. Die Verbindungsaufbaunachricht 112 wird auch als IAM-Nachricht (Initial Address Message) bezeichnet. Die Verbindungsaufbaunachricht 112 enthält unter anderem die Rufnummer des Teilnehmers TlnB und den von der Vermittlungsstelle 50 vorgegebenen Zeitschlitz. In der Transitvermittlungsstelle 34 wird die Verbindungsaufbaunachricht 112 protokollgemäß bearbeitet und an die Endvermittlungsstelle 38 weitergeleitet. Die Endvermittlungsstelle 38 ruft den Teilnehmer TlnB bzw. den Rechner DB.

In der Vermittlungsstelle 50 wird beim Bearbeiten der Verbindungsaufbaunachricht 106 nach dem Empfang der Antwortnachricht 110 eine Transportnachricht 114 erzeugt, die gemäß Protokoll ISUP auch als APM-Nachricht (Application Transport Message) bezeichnet wird. Die Transportnachricht 114 enthält ein Informationselement mit der Internetadresse der Netzzugangseinheit 42 und ein Informationselement mit der von der Netzzugangseinheit 42 übermittelten Portnummer, siehe Punkte 115. Diese Informationselemente haben den gleichen Aufbau wie die unten anhand der Figuren 2 und 3 erläuterten Informationselemente. Die Transportnachricht 114 wird zu einem Zeitpunkt t8 an die Vermittlungsstelle 48 übertragen.

Die Steuereinheit der Vermittlungsstelle 48 entnimmt aus der Transportnachricht 114 die Internetadresse und die Portnummer und veranlasst, dass der Diensterbringungsrechner 52 diese Verbindungsparameter an die Netzzugangseinheit 28 weitergibt. Dazu sendet der Diensterbringungsrechner 52 zu einem Zeitpunkt t9 eine Änderungsnachricht 116 gemäß Defacto-Standard RFC 2705. Die Änderungsnachricht 116 wird auch als MDCX-Nachricht (Modify Connection) bezeichnet. Die Anderungsnachricht 116 enthält die Internetadresse der Netzzugangseinheit 42 und die für die aufzubauende RTP-Verbindung zu nutzende Portnummer der Netzzugangseinheit 42.

In der Netzzugangseinheit 28 wird die Änderungsnachricht 116 verarbeitet, so dass ein direkter Übertragungsweg 118 zum Übertragen von Nutzdaten gemäß Protokoll RTP und CODEC G.711 bzw. G.723.1 zwischen den Netzzugangseinheiten 28 und 42 nutzbar ist. Eine von der Netzzugangseinheit 28 erzeugte Antwortnachricht auf die Änderungsnachricht 116 ist in Figur 1 nicht dargestellt.

Zu einem folgenden Zeitpunkt t10 erzeugt die Transitvermittlungsstelle 34 protokollgemäß eine Nachricht 120, die auch als ACM-Nachricht (Address Complete Message) bezeichnet wird und signalisiert, dass alle Wahlziffern übertragen worden sind, um die Teilnehmer TlnA und TlnB bzw. die Rechner DA und DB zu verbinden. Die Nachricht 120 wird von der Steuereinheit der Vermittlungsstelle 50 protokollgemäß bearbeitet. Zu einem Zeitpunkt t11 sendet die Vermittlungsstelle 50 gemäß Protokoll ISUP eine ACM-Nachricht 122 an die Vermittlungsstelle 48. Die Vermittlungsstelle 48 verarbeitet die ACM-Nachricht 122 und sendet ihrerseits eine ACM-Nachricht 124 an die Transitvermittlungsstelle 24.

Es sei angenommen, dass der Parameter TMR den Wert "64 kBit/s unbeschränkt" hat. Meldet sich der Rechner DB des Teilnehmers TlnB, so wird dies gemäß Protokoll ISUP an die Transitvermittlungsstelle 34 signalisiert. Die Transitvermittlungsstelle 34 erzeugt zu einem Zeitpunkt t13 eine Antwortnachricht 126, die über die Signalisierungsverbindung 60 zur Vermittlungsstelle 50 übertragen wird. Die Antwortnachricht 126 wird auch als ANM-Nachricht (Answer Message) bezeichnet. Aufgrund dieser Nachricht beginnt die Gebührenpflicht.

In der Vermittlungsstelle 50 wird die Antwortnachricht 126 protokollgemäß bearbeitet. Dabei wird an die Vermittlungsstelle 48 eine Antwortnachricht 128 gesendet. Die Vermittlungsstelle 48 erzeugt aufgrund der Antwortnachricht 128 zu einem Zeitpunkt t15 eine Antwortnachricht 130 an die Transitvermittlungsstelle 24.

Die vom Rechner DA des Teilnehmers TlnA kommenden Daten werden in den Teilen 14 und 16 des Telefonnetzes 12 und über die Übertragungsstrecken 26 und 40 in Zeitschlitzen und gemäß CODEC G.711 übertragen. Eine Echounterdrückung, eine Sprachpausenunterdrückung und eine Komprimierung werden nicht ausgeführt. Im Internet 10 werden die Daten in Datenpaketen übertragen. Vorgänge in der Netzzugangseinheit 42 werden unten an Hand der Figur 5 erläutert.

Figur 2 zeigt den Aufbau eines Informationselementes 150 zur Übertragung einer Internetadresse. Das Informationselement 150 enthält bei einem ersten Ausführungsbeispiel neun aufeinanderfolgende Datenfelder 152 bis 168, die jeweils eine Länge von acht Bit haben, d.h. von einem Byte. Bitpositionen 0 bis 7 liegen in dieser Reihenfolge von rechts nach links. Im Datenfeld 152 wird ein Kennzeichen zur Kennzeichnung des Informationselementes 150 übertragen. Das Kennzeichen hat den Wert 3, der im Standard Q.765.5 zum Hinweis auf sogenannte "Interworking Function Address" dient und der hier anzeigt, dass das Informationselement 150 zur Übertragung einer Internetadresse dient.

In einem Datenfeld 154 wird die Länge des Informationselementes 150 abzüglich der Datenfelder 152 und 154 angegeben. Im Ausführungsbeispiel ist im Datenfeld 154 der Wert Sieben binär gespeichert, siehe auch Standard Q.765.5, Abschnitt 11.1.1.

In dem Datenfeld 156 wird eine Kompatibilitätsinformation übertragen, deren Wert dem Empfänger anzeigt, was zu tun ist, wenn er das Informationselement 150 nicht vollständig bearbeiten kann, siehe auch Standard Q.765.5, Abschnitt 11.1.1.

Im Datenfeld 158 wird ein Berechtigungs- und Formatkennzeichen übertragen, das in hexadezimaler Schreibweise den Wert "35" hat. Dieser Wert wird gemäß Standard X.213 Anhang A der ITU als Hinweis auf das Internetprotokoll verwendet.

Im Datenfeld 160 ist ein Kennzeichen mit dem Wert Eins gespeichert, wenn eine Internetadresse gemäß Internetprotokoll Version 4 übertragen wird. In den sich anschließenden Datenfeldern 162 bis 168 werden dann die vier Byte der Internetadresse gemäß Version 4 des Internetprotokolls übertragen.

Soll dagegen mit Hilfe des Informationselementes 150 eine Internetadresse gemäß Internetprotokoll Version 6 übertragen werden, so gibt es eine Abweichung in der Längenangabe, siehe Datenfeld 154 und eine Abweichung im Datenfeld 160. Im Datenfeld 160 wird bei der Übertragung von Internetadressen gemäß Internetprotokoll Version 6 der Wert Null übertragen. In diesem Fall schließen sich an das Datenfeld 160 sechzehn Datenfelder 162 bis 170 an, in denen die 16 Byte der Internetadresse gemäß Internetprotokoll Version 6 gespeichert sind, siehe auch Punkte 172.

Figur 3 zeigt den Aufbau eines Informationselementes 180 zur Übertragung einer Portnummer. Das Informationselement 180 enthält vier Datenfelder 182 bis 188 von jeweils einem Byte Länge. Die Bedeutung der Datenfelder 182 bis 186 entspricht in dieser Reihenfolge der Bedeutung der Datenfelder 152 bis 156 des Informationselementes 150. Im Datenfeld 182 wird der Wert Zwei übertragen, um das Informationselement 180 als Informationselement zur Übertragung einer Portnummer zu kennzeichnen. Das im Datenfeld 182 übertragene Kennzeichnen wird abweichend von der hier erbrachten Funktion im Standard Q.765.5 als "backbone network connection identifier" bezeichnet. In einem Datenfeld 184 wird der Wert Zwei als Länge des Informationselementes 180 abzüglich der Datenfelder 182 und 184 übertragen. Im Datenfeld 186 wird eine Information zur Kompatibilität übertragen. Im Datenfeld 188 wird dann die zu übertragende Portnummer übertragen, z.B. die in der Netzzugangseinheit 28 bzw. in der Netzzugangseinheit 42 für die RTP-Verbindung zu nutzende Portnummer, siehe Figur 1.

Figur 4 zeigt den Aufbau eines Codeelementes 200, das zur Bezeichnung von Rufinstanzen zwischen den Vermittlungsstellen 48 und 50 eingesetzt wird. Der Aufbau des Codeelementes 200 ist im Standard Q.763, Abschnitt 1.2 festgelegt. Das Codeelement 200 enthält zwei Datenfelder 202 und 204 mit jeweils einer Länge von einem Byte. Die Nummer der Instanz wird beginnend mit dem niederwertigsten Bit im Datenfeld 202, siehe Bitposition 0, bis zur Bitposition 7 des Datenfeldes 202 und dann weiter zwischen den Bitpositionen 0 bis 3 des Datenfeldes 204 übertragen. Die Bitpositionen 4 bis 7 des Datenfeldes 204 werden nicht zur Bezeichnung der Instanz genutzt. Das Codeelement 200 hat keine weiteren Datenfelder.

Figur 5 zeigt drei Datenpakete 250, 252 und 254, die in dieser Reihenfolge von der Netzzugangseinheit 28 in das Internet 10 gesendet werden, um Rechnerdaten zum Rechner DB des Teilnehmers TlnB zu übertragen. Das Datenpaket 250 enthält eine Sequenznummer SN mit dem Wert Eins. Im Datenpaket 252 bzw. im Datenpaket 254 ist eine Sequenznummer SN mit dem Wert 2 bzw. 3 angegeben. Die Sequenznummer ist im Defacto-Standard RFC 1889 festgelegt.

Durch den Wert im Datenfeld "X-MaJiBu" in der Verbindungsaufbaunachricht 108 wurde eine Wartezeit T von 200 Millisekunden auf Grund des eine Datenübertragung kennzeichnenden Wertes "64 kBit/Sekunde unbeschränkt" im Parameter TMR gewählt.

Das Datenpaket 250 wird in der Netzübergangseinheit 42 zu einem Zeitpunkt t0a empfangen. Ausgehend von diesem Zeitpunkt t0a wird 200 Millisekunden auf das Eintreffen des Datenpaketes 252 gewartet. Es sei angenommen, dass das Datenpaket 252 nicht innerhalb dieser Zeitdauer eintrifft, siehe Klammer 256. Nach dem Ablauf der Wartezeit T von 200 Millisekunden wird von der Netzübergangseinheit 42 die nochmalige Übertragung des Datenpaketes 252 angefordert. Trifft das Datenpaket 252a dann zu einem Zeitpunkt t1a ein, so stellt die Netzzugangseinheit 42 die Reihenfolge gemäß der Sequenznummern SN wieder her. Anschließend wird die Weiterleitung der Nutzdaten in dem Zeitkanal der Übertragungsstrecke 40 fortgesetzt. Zu einem Zeitpunkt t2a trifft das Datenpaket 254 in der Netzübergangseinheit 42 ein. Die Wartezeit T bis zum Eintreffen des vierten Datenpaketes beträgt wiederum nur 200 Millisekunden.

Werden Sprachdaten vom Teilnehmer TlnA zum Teilnehmer TlnB übertragen, so wird auf Grund des Wertes "Sprachdaten" im Parameter TMR nur 30 Millisekunden als Wartezeit T gewählt. Trifft nach dieser Zeit das aktuell erwartete Datenpaket der Reihenfolge nicht ein, so werden beispielsweise Fülldaten über die Übertragungsstrecke weitergeleitet. Anschließend wird das nächste Datenpaket gemäß Reihenfolge bearbeitet.

Ähnliche Vorgänge wie anhand der Figur 5 erläutert, finden in der Netzzugangseinheit 28 für die Gegenrichtung statt. Auch beim umsetzen der über das Internet 10 empfangenen Rechnerdaten in den Zeitkanal der Übertragungsstrecke 26 wird eine Wartezeit T von 200 Millisekunden eingesetzt.

Zur Signalisierung zwischen den Vermittlungsstellen 48 und 50 werden bei einem anderen Ausführungsbeispiel Signalisierungsnachrichten gemäß BICC-Standard eingesetzt. Im Übrigen bleiben die anhand der Figuren 1 bis 5 erläuterten Vorgänge unverändert.

Bei einem weiteren Ausführungsbeispiel bestimmt der Wert des Parameters "X-MaJiBu" die Größe eines Zwischenspeichers zum speichern der Datenpakete in den Netzzugangseinheiten direkt. Indirekt wird damit die Wartezeit festgelegt, weil bei Überlauf des Zwischenspeichers die Bearbeitung fortgesetzt werden muss.

Die in den Ausführungsbeispielen genannten Komponenten sind beispielsweise Komponenten des Systems SURPASS der SIEMENS AG, siehe WEB-Seite www.siemens.com/data&voice. So sind die Diensterbringungsrechner Bestandteil der Komponente hiQ des Systems SURPASS.

## Patentansprüche

1. Verfahren zum Übertragen von Daten verschiedener Anwendungen über ein Paketübertragungsnetz (10),
bei dem in einem Paketübertragungsnetz (10) Datenpakete (250 bis 254) Lenkdaten und Nutzdaten enthalten,
bei dem die Datenpakete (250 bis 254) abhängig von den Lenkdaten in dem Paketübertragungsnetz (10) weitergeleitet und gemäß einem vorgegebenen Übertragungsprotokoll übertragen werden,
bei dem beim Empfang der Datenpakete (250 bis 254) die Reihenfolge wiederhergestellt wird, in welcher die Datenpakete (250 bis 254) gesendet worden sind,
bei dem die empfangenen Datenpakete (250 bis 256) der Reihenfolge nach weiter bearbeitet werden,
bei dem abhängig von einer Vergleichsgröße ("X-MaJiBu") die Bearbeitung der Datenpakete (250 bis 254) in der wiederhergestellten Reihenfolge fortgesetzt wird, auch wenn ein vorhergehendes Datenpaket (252) noch nicht empfangen worden ist, oder bei dem abhängig von der Vergleichsgröße ("X-MaJiBu") eine Wiederholung der Übertragung mindestens eines Datenpaketes (252) angefordert wird,
und bei dem abhängig von der Anwendung, für welche die Nutzdaten übertragen werden, für verschiedene Anwendungen verschiedene Werte der Vergleichsgröße ("X-MaJiBu") vorgegeben werden.

2. Verfahren nach Anspruch 1,
**dadurch gekennzeichnet, dass** die Datenpakete (250 bis 254) jeweils eine Sequenznummer (SN) zum Festlegen der Reihenfolge und/oder eine Zeitangabe enthalten, die angibt, welchen Bezug die in dem betreffenden Datenpaket (250 bis 254) enthaltenen Nutzdaten zu einer Bezugszeit oder zu einem Bezugstakt haben.

3. Verfahren nach Anspruch 1 oder 2,
**dadurch gekennzeichnet, dass** das Übertragungsprotokoll ein Protokoll ist, das zur Echtzeitübertragung von Nutzdaten geeignet ist, vorzugsweise das Protokoll RTP.

4. Verfahren nach einem der vorhergehenden Ansprüche,
**dadurch gekennzeichnet, dass** die eine Anwendungsart die Übertragung von Sprachdaten in Echtzeit ist, und dass die andere Anwendungsart die Übertragung von Rechnerdaten ist, die bereits vor Beginn der Übertragung vollständig in einer Sendeeinheit (DA) gespeichert sind, vorzugsweise von Programmdaten zum Festlegen von Befehlen für einen Prozessor und/oder von Textdaten und/oder von Bilddaten, und/oder dass der Wert der Vergleichsgröße bei der Übertragung von Rechnerdaten erheblich größer als der Wert der Vergleichsgröße bei der Übertragung von Sprachdaten ist.

5. Verfahren nach einem der vorhergehenden Ansprüche,
**dadurch gekennzeichnet, dass** zwischen zwei Endgeräten (DA, DB) eines durchschaltevermittelten Telekommunikationsnetzes (12) ein Übertragungsweg zum Übertragen der Nutzdaten festgelegt wird,
ein zwischen zwei Netzübergangseinheiten (28, 42) liegender Abschnitt (118) des Übertragungsweges in dem Paketübertragungsnetz (10) liegt,
die Netzübergangseinheiten (28, 42) durch mindestens eine Steuereinheit (52, 54) gesteuert werden,
und dass die Steuereinheit (54) der Datenpakete (250 bis 252) empfangenden Netzübergangseinheit (42) den Wert der Vergleichsgröße ("X-MaJiBu") vorgibt.

6. Verfahren nach Anspruch 5,
**dadurch gekennzeichnet, dass** eine Steuereinheit (52, 54) räumlich entfernt von einer Netzübertragungseinheit (28, 42) angeordnet ist,
und dass zwischen Steuereinheit (52, 54) und Netzübergangseinheit (28, 42) ein standardisiertes Protokoll oder ein defacto-standardisiertes Protokoll zum Übertragen von Steuerungsnachrichten eingesetzt wird, insbesondere das Protokoll gemäß Standard H.248 oder das Protokoll MGCP oder ein auf einem dieser Protokolle aufbauendes Protokoll.

7. Verfahren nach Anspruch 5 oder 6,
**dadurch gekennzeichnet, dass** die Steuereinheit (52, 54) an die die Datenpakete (250 bis 254) empfangende Netzübergangseinheit (28, 42) eine Verbindungsaufbaunachricht (102, 108) sendet, in welcher der Wert für die Vergleichsgröße ("X-MaJiBu") angegeben ist,
und dass die Vergleichsgröße ("X-MaJiBu") vorzugsweise in einem Paket festgelegt ist.

8. Verfahren nach einem der vorhergehenden Ansprüche,
**dadurch gekennzeichnet, dass** beim Festlegen des Übertragungsweges mindestens eine Vermittlungsstelle (48, 50) zum Vermitteln von Daten in einem durchschaltevermittelten Datenübertragungsnetz einbezogen wird,
und dass die Anwendungsart der Daten anhand eines in einem Signalisierungsprotokoll für Vermittlungsstellen festgelegten Parameters ermittelt wird, vorzugsweise anhand des im ISUP-Standard oder im BICC-Standard festgelegten Parameters (TMR) zur Beschreibung der Anforderung an das Übertragungsmedium, und dass die Vermittlungsstelle (48, 50) die Vorgabe des Wertes für die Vergleichsgröße ("X-MaJiBu") veranlasst.

9. Verfahren nach einem der vorhergehenden Ansprüche,
**dadurch gekennzeichnet, dass** das Paketübertragungsnetz (10) das Internet oder ein anderes gemäß Internetprotokoll arbeitendes Datenübertragungsnetz ist.

10. Verfahren nach einem der vorhergehenden Ansprüche,
**dadurch gekennzeichnet, dass** der Wert der Vergleichsgröße direkt eine Wartezeit angibt oder dass der Wert der Vergleichsgröße die Größe eines Zwischenspeichers zum Speichern von Datenpaketen festlegt.

11. Netzübergangseinheit (28, 42),
**dadurch gekennzeichnet, dass** die Netzübergangseinheit (28, 42) so aufgebaut ist, dass sie zum Einsatz in einem Verfahren gemäß einem der Ansprüche 1 bis 10 geeignet ist.

12. Steuereinheit (52, 54) für eine Netzübergangseinheit (28, 42), **dadurch gekennzeichnet, dass** die Steuereinheit (52, 54) so aufgebaut ist, dass sie zum Einsatz in einem Verfahren gemäß einem der Ansprüche 1 bis 10 geeignet ist.

13. Vermittlungsstelle (48, 50),
**dadurch gekennzeichnet, dass** die Vermittlungsstelle (48, 50) eine Steuereinheit (52, 54) gemäß Anspruch 12 enthält.

14. Programm mit einer Befehlsfolge, bei deren Ausführung durch einen Prozessor ein Verfahren nach einem der Ansprüche 1 bis 10 ausgeführt oder die Funktion einer Einheit nach einem der Ansprüche 11 bis 13 erbracht wird.
